# EUROPEAN PATENT APPLICATION

(11) **EP 2 693 385 A2**
(43) Date of publication of application: **05.02.2014**
(21) Application number: 13179007.3
(22) Date of filing: 01.08.2013
(51) Int. Cl.: G06Q 30/06

(54) **Apparatus for and method of handling transactions between a group of purchasers and a vendor**

(30) Priority: 03.08.2012 GB 201213811
(71) Applicant: Make It Social Limited, Aberdeenshire AB34 5AA (GB)
(72) Inventor: Robb, Edward, Kincardine O'Neil, Aberdeenshire AB34 5AA (GB); Wen, Qingying, Edinburgh, Lothian EH6 5DY (GB); Leigh-Bramwell, Robert, Bolton, Lancashire BL6 7SL (GB); Mehta, Robin, Edinburgh, Lothian EH3 5NS (GB); Garden, Sarah, Inverness, Highland IV2 3HE (GB)
(74) Representative: Peter, Kenneth William

(57) **Abstract**

The present invention relates to transaction handling apparatus 10 which is operable to effect a transaction between a group of purchasers and a vendor. The transaction handling apparatus 10 comprises vendor apparatus 14 which is operable to run a vendor process, the vendor process being operative to display at least one user operable component, the user operable component being associated with a product or service on offer. The transaction handling apparatus 10 also comprises server apparatus 12 operable to run a server process and store purchase data comprising identification data identifying each of plural purchasers. The transaction handling apparatus 10 further comprises plural client processes 18, 20 each operable in cooperation with the server process at a location remote from the server apparatus 12. The transaction handling apparatus 10 yet further comprises payment processing apparatus 16 operable in dependence on operation of the client processes 18, 20 to receive payment in respect of each of the client processes and to convey the payments to the vendor, the payment received in respect of each client process being a part of the price of the product or service. The transaction handling apparatus 10 is configured such that operation by a user of the user operable component displayed on a client process 18, 20 by the vendor process stores product data relating to the product or service associated with the user operated component, the stored product data being comprised in the purchase data. Example of application is booking or paying a holiday by a group of persons.

## Description

### Field of the Invention

The present invention relates to transaction handling apparatus which is operable to effect a transaction between a group of purchasers and a vendor and a method therefor.

### Background to the Invention

Planning and organising a holiday involving a group of persons can present difficulties with regards to gaining agreement amongst the group as to details of the holiday, such as departure date, duration of the holiday, destination, type of accommodation, etc. Furthermore gaining clear commitment from group members to participate in a holiday and then arranging for payment from group members so as to meet a holiday vendor's terms can present difficulties. The present inventors have appreciated that the Internet provides for ease of communications amongst a group of persons and in particular persons who may not be in sufficiently regular personal contact with one another. The Internet therefore provides a basis for addressing the above mentioned difficulties.

The Groupize software application from Groupize.com of Boston, MA, USA is an example of a means for a group of persons to book accommodation. After accessing the Groupize website and setting up a Groupize account the group planner initiates the group booking process by specifying a destination, a check-in date and a checkout date. The Groupize application then prompts the group planner to enter the number of persons in the group, the number of rooms required, the maximum number of guests per room and the type of group, e.g. corporate, friends and family or sports team. In response to a command from the group planner the Groupize application returns a list of available accommodation. The group planner selects one of the returned accommodation options and is then requested to specify a name for the group, which is saved to the group planner's account along with other pertinent group booking information, and to enter his or her personal details whereby all the accommodation is booked initially in the group planner's name. The group planner then manages the booking though a dashboard accessed by way of his or her account. Management tasks include sending of invitations by email to potential group members. An email invitation invites a potential member to join the group by providing his or her name and credit card details. Upon receipt of a positive reply from a potential group member the group planner enters the specified name and credit card details to thereby add the potential group member as an actual group member.

The present inventors have become appreciative of certain shortcomings of known approaches such as the Groupize software application. The present invention has been devised in the light of the inventors' appreciation of such shortcomings. An object for the present invention is therefore to provide transaction handling apparatus which is operable to effect a transaction between a group of purchasers and a vendor, the apparatus being configured for operation on a computer network, such as on the Internet. It is a further object for the present invention to provide a method of effecting a transaction between a group of purchasers and a vendor by way of transaction handling apparatus configured for operation on a computer network.

### Statement of Invention

In the light of the inventors' above mentioned appreciation and according to a first aspect of the present invention there is provided transaction handling apparatus which is operable to effect a transaction between a group of purchasers and a vendor, the transaction handling apparatus comprising:
vendor apparatus which is operable to run a vendor process, the vendor process being operative to display at least one user operable component, the user operable component being associated with a product or service on offer;
server apparatus operable to run a server process and store purchase data comprising identification data identifying each of plural purchasers;
plural client processes each operable in cooperation with the server process at a location remote from the server apparatus; and
payment processing apparatus operable in dependence on operation of the client processes to receive payment in respect of each of the client processes and to convey the payments to the vendor, the payment received in respect of each client process being a part of the price of the product or service,
the transaction handling apparatus being configured such that operation by a user of the user operable component displayed on a client process by the vendor process stores product data relating to the product or service associated with the user operated component, the stored product data being comprised in the purchase data.

A user, such as a group leader, navigates to a vendor's website by way of computing apparatus, such as a laptop. The vendor's website may display various products or services on offer in cooperation with a client process operating on the user's computer. Upon seeing a product or service which is of interest for a group purchase, the user operates a user operable component which is displayed by way of the client process and is associated with the product or service of interest. For example the leader may browse an on-line catalogue of available holidays, e.g. from a holiday package vendor, and then select a particular holiday which is to be the subject of a group holiday purchase. The user operable component may be an icon which may be operated by the like of a mouse click or by touching a portion of a touchscreen above the user operable component. The vendor's website may display plural user operable components with each user operable component being associated with a different product or service. Upon operation of the user operable component the transaction handling apparatus is operative to store in the server apparatus product data relating to the chosen product or service, the product data being comprised in the purchase data. The product data may for example comprise information identifying the product or service and a price of the product or service. Thereafter users, such as group members, may by way of operation of a respective client process each pay for their share of the price of the product or service.

Known applications comprise a vendor process which is configured to perform functions of the server process whereby group purchasers engage and pay for the purchase by way of a client process which cooperates with the vendor process itself. The present invention may comprise a server process separate from the vendor process which cooperates with the client processes and thereby offers advantages over known applications, such as in respect of providing for separately managed and configurable user accounts, improved persistence of data relating to a group transaction, greater control of the group transaction by the purchasers and improved security for group members. Furthermore the present invention affords the convenience of initiating a group purchase from a vendor's website by way of operation of the user operable component whereas certain known applications involve initiating a group purchase from the server apparatus operator's website.

The vendor process and the client process may be operable to display the information to the user by way of a window on the user's computer. The vendor process and the client process may, for example, be operative to display an on-line catalogue of package holidays to whoever is browsing the catalogue by way of a web browser. In one form the operator of the server process, i.e. the operator of the group purchasing application, and the vendor may be the same. According to this form one of the server apparatus and the vendor apparatus may be comprised in the other.

The vendor process may comprise plural user operable components, such as clickable icons, with each user operable component being associated with a different one of plural products or services on offer. Upon user selection of a product or service by operation of the user operable component associated with the product or service, the transaction handling apparatus may be operative to initiate a main client process. In addition a main client process may be operative to display a client process dialog box. Where the transaction handling apparatus further comprises vendor apparatus running a vendor process which is operable in cooperation with a client process to display information on at least one product or service in a window, the client process dialog box may be superimposed on the window. A user, such as the group leader, may then configure the purchase data by way of the client process dialog box, e.g. by determining who is to form part of the group of purchasers.

Alternatively or in addition and in dependence on user operation of the user operable component the server process may be operative to store product data relating to the selected product or service. The server process stored product data may be received from the vendor process. More specifically the received product data may be stored by the vendor, e.g. in a data file associated with the selected product or service. Alternatively or in addition the product data may be obtained from a third party, such as TourCMS. Alternatively or in addition the server process stored product data may be acquired from vendor data associated with the selected product or service, such as vendor data displayed to the user by way of a window on the user's computer. More specifically the product data may be acquired from the vendor data by way of a known web scraping process which is configured to acquire pertinent product data from the vendor data. The client process may be operative in cooperation with the server process to display the product data to the user. The user operable component may comprise a Universal Resource Locator (URL) which identifies the vendor web-address and the associated product or service. Upon user operation of the operable component the URL may be sent to the server. The server may then be operative to determine where product data is to be obtained, such as by way of a look up table. The server may then be operative to obtain the product data by one of the approaches described above. Obtained product data may relate to the selected product or service, e.g. data identifying the product or service, price data, etc.

The transaction handling apparatus may be configured such that stored product data may be changed by the vendor. The vendor apparatus may be configured such that the vendor may gain access to at least a part of the product data, e.g. by way of administrator privileges of perhaps a limited nature granted by the server apparatus. The vendor may thereby change the stored product data such as in respect of the like of pricing, passport information or dates and times of a holiday where the subject of the group purchase is a holiday. A vendor may alternatively or in addition effect change to stored product data by way of communication between the vendor and at least one group member. Communication may, for example, be by way of a dialog box which is configured to provide for reciprocal communication between the vendor and at least one group member. The vendor may thereby influence at least one group member whereby the group member changes the stored product data as described elsewhere herein. The transaction handling apparatus may be configured to compare the stored product data with data held by a third party, such as TourCMS, and to update the stored product data in dependence on the comparison. The stored product data may be updated thereby to take account of changes pertinent to the stored product data, such as changes in pricing. The transaction handling apparatus may be configured to make the comparison on a periodic basis, such as once a day. The vendor may thus effect change to the stored product data by updating the like of TourCMS, such as in respect of a change to a departure time, with the stored product data being updated accordingly in dependence on periodic comparisons with the stored product data with data held by the like of TourCMS.

The server may be operative to convey data to the client process for display on the client apparatus, for example in the form of a window which is superimposed over a window which displays the vendor website. The conveyed data may comprise data which determines a form of the window displayed to the user, such as in respect of size, design and layout. Where product data is acquired by web scraping, the conveyed data may comprise code to perform the scraping process. Microformat or microdata may be employed to accommodate changes in location on the vendor webpage of information to be scraped.

As mentioned above a group leader may take responsibility for organising a group holiday with the group leader, for example, selecting the like of a particular holiday package, the number of potential group members and a price or price range for the holiday package. The plural client processes may therefore comprise a main client process, which is for example operable by a group leader, and at least one secondary client process, which is for example operable by a group member. The main client process may be configured to provide for entry of a first plurality of commands which are operative to configure or change the purchase data and the at least one secondary client process may be configured to provide for entry of a second plurality of commands which are operative to change the purchase data, the first and second plurality of commands being different to each other, although the first and second plurality may comprise commands in common. The group leader may engage by way of the main client process and a group member may engage by way of a secondary client process. The main client process may be configured to provide for entry by the group leader of plural different main commands which are operative to determine purchase data, such as purchase data identifying a particular holiday package, the number of potential group members, a price or price range for the holiday package and the like.

Each of the other members of the potential group of purchasers may engage by way of another client process which is operative, for example, on the other group member's Personal Computer (PC). More specifically the configuration of the client process for entry by another group member of plural different commands may allow the other group member to, for example, opt out of the holiday package, commit to the holiday package, make payment in part or whole for their share of the holiday package, make payment in part of whole for the share of another group member and record pertinent travel information, such as passport details. In contrast the known approach according to Groupize provides a client process which is used by the group leader and lacks client processes for the other members of the group. The plural client processes may comprise plural secondary client processes, whereby two or more potential group members or actual group members may engage with the transaction handling apparatus.

The plural client processes may be operable on client apparatus. More specifically each client process may be operable on a respective client apparatus. The plural client apparatus may be at locations spaced apart from one another. A client process may for example be operable on at least one of a Personal Computer (PC), such as a laptop, and a mobile computing device, such as a smartphone.

The server apparatus may comprise a web server. At least one client process may be operative to provide a web browser. Communication between and amongst server and client processes may be by way of a computer network, such as the Internet. A client process may be operative to provide at least one dialog box. The dialog box may be a web browser window. The dialog box may be displayed on a display surface of client apparatus, such as on a PC monitor or on a display screen of a mobile computing device. The dialog box may provide for reciprocal communication between the client process and the user. More specifically the dialog box may comprise plural user operable components, such as clickable areas, which are operative to initiate the plural different commands. The client process may be configured such that the dialog box is modeless whereby the user may, for example, be able to carry out tasks on client apparatus other than in respect of the client process.

A client process may be configured to display plural different dialog boxes to a user of the client process. For example the client process may be operative to display a web browser window comprising plural dialog boxes. The client process may be operative to display one dialog box at a time. More specifically the plural dialog boxes may be displayed to the user in a predetermined sequence, e.g. in dependence on the user completing a predetermined sequence of interactions on successive dialog boxes. For example and upon determination by the server apparatus by way of comparison of the sum of received payments with the price data that the price has been met by the received payments, the client process progresses from display of a payment dialog box to a dialog box which allows a user to request purchase information when the group transaction is complete. Alternatively or in addition the plural dialog boxes may be displayed to the user in accordance with a user command. For example the dialog boxes may be overlaid and the client process configured such that each dialog box is selected by the user by clicking on one of plural tabs.

A client process may be operative to set up a user account for a particular user. Interaction between the client process and the user to set up the user account may be by way of a web browser window, which is operative to allow the user to enter pertinent new user account information, such as username, email and password. The client process may be configured likewise to gain access to an existing user account, e.g. by entry of pertinent information, such as username and password. Alternatively or in addition the client process may be operative to allow a user access to an existing user account by way of a third party social media application, such as Facebook. According to this approach the client process may be configured such that a web browser window comprises a user operable component, such as a clickable area, which initiates the third party social media application sign in process. A group leader and members of a group may set up respective accounts and gain access to respective existing accounts by way of a respective client process configured as described above. The main client process may be operative for configuration or change of purchase data by a user. For example and where the product is a holiday package the group leader may specify or change the start and end dates of the holiday and may specify persons who are to form the group of purchasers. The main client process may be configured to enable the user to determine one of plural different ways in which plural other users may interact with their respective client processes. More specifically the main client process may be configured to enable plural users to vote in respect of at least one feature of product data. Thus, for example, the plural users may place a vote in favour of or against different dates for a group holiday, different hotels, activities forming part of a holiday, etc. Alternatively or in addition the main client process may be configured to send at least one electronic communication, e.g. to a person who is invited to join the group. An electronic communication may be in the form of an email. A secondary client process may be configured, e.g. upon signing in of a group member to his or her account following receipt of an email from the group leader, to receive the purchase data from the server process. The group member may therefore view the details of the purchase and take action as described below. The electronic communication may comprise a user operable component, such as a hyperlink. The secondary client process and the server process may be operative in cooperation and in dependence upon user operation of the user operable component to provide the purchase data to the recipient of the electronic communication. More specifically user operation of the user operable component in the electronic communication may cause the secondary client process to display the purchase data in a window, such as a dialog box. As described above the window may be superimposed on a further window operative to display information on at least one product or service, such as a further window operative to display a page from a vendor's on-line catalogue. The purchase and product data as configured by the group leader may therefore be displayed to the invitee by way of a dialog box of the same general form and in the same general fashion as the dialog box displayed to the group leader.

The secondary client process may be configured for entry of plural different commands by a user. According to one example the user, e.g. group invitee, may by means of a user operable component choose to join the group or to opt out of the group. As mentioned above the main client process may be configured to enable plural users to vote in respect of at least one feature of product data. Therefore according to another example the secondary client process may be configured by way of a user operable component to vote in favour of or vote against at least one feature of the product or service. According to another example the user may by means of a user operable component make payment in part or whole. Each payment made may be recorded in the server apparatus. In addition the server apparatus may be operable to compare a sum of the received payments with the price data. More specifically the server apparatus may be operable to determine whether or not the group transaction is complete in dependence on the comparison. According to another example the secondary client process may be configured to send at least one electronic communication, e.g. to a person who is invited to join the group. Group members may therefore invite friends to join the group. The facility for group members to invite friends may be enabled and disabled by the group leader. According to yet another example the user may by means of a user operable component request purchase information when the group transaction is complete. According to a further example the user may by means of a user operable component: view other members of the group; communicate with an operator to get assistance, such as an operator associated with the transaction handling apparatus; or communicate with other group members by way of a user writable space which may be viewed by the other group members. The entry of plural different commands may be by way of plural different dialog boxes with each dialog box relating for example to a different one of these examples. The main client process may be operable by a user, such as the group leader, to disable a part of the secondary client processes. More specifically the main client process may be operable to disable a part of the secondary client processes which allow for other users to commit to the group transaction or opt out of the group transaction. Thus operation of the transaction handling apparatus may progress to a phase where a group of users are committed to the purchase.

The transaction handling apparatus may be configured to add to the purchase data and price data after purchase of a product or service is complete. The addition to the purchase data and price data may be in respect of a product or service supplementary to an already purchased product or service. For example where the purchase is a holiday further data may be added in respect of one or more activities forming part of the holiday, such as a day trip. The addition to the purchase data and price data may be effected as described elsewhere herein, e.g. by a user such as the group leader operating a user operable component, such as a clickable icon, associated with the additional product or service. Secondary client operations in respect of the additional product or service, such as opting in or out, voting and payment, may be as described elsewhere herein.

The transaction handling apparatus may be configured to provide recommendations to users, e.g. by way of the dialog box, in respect of a product or service. More specifically the recommendations may be in respect of a product or service or in respect of additional parts to the product or service which is to be the subject of a purchase or to an already purchased product or service. The transaction handling apparatus may be configured to determine recommendations to be made in dependence on operation of a data harvesting and interpretation process. Data may be harvested from data stored in the transaction handling apparatus or data stored in an associated third party social media application, such as Facebook. The data harvesting and interpretation process may, for example, be operative to determine characteristic data for at least one user of the transaction handling apparatus, such as age group, personal interests or past holidays or activities booked, and to select at least one product or service for recommendation in dependence on the determined characteristic data.

The payment processing apparatus may be at a location spaced apart from the locations of the plural client processes. Alternatively or in addition the payment processing apparatus may be at a location spaced apart from the server apparatus. The payment processing apparatus may alternatively be comprised in the server apparatus. Payment processing apparatus may be operable to run a payment process which is operative to transfer funds from a purchaser to the vendor. The payment process may be operative to effect direct transfer of funds to the vendor, e.g. by way of a purchaser's debit card. Alternatively or in addition the payment process may be operative to transfer funds held by the purchaser in an e-commerce account to the vendor. The payment process may therefore comprise a third party payment handling application, such as a bank e-commerce payment handling application or PayPal.

The transaction handling apparatus may be configured to effect a transaction between a group of purchasers and a vendor in a variety of applications. For example and as described in detail below the transaction handling apparatus may be configured to book and pay for a holiday. By way of further examples the transaction handling apparatus may be configured to book and pay for ticketed events, such as cinema shows, to participate in and pay for gambling and in particular on-line gambling and to pay for utility bills.

According to a second aspect of the present invention there is provided a method of effecting a transaction between a group of purchasers and a vendor by way of transaction handling apparatus, the method comprising:
running a vendor process on vendor apparatus, the vendor process being operative to display at least one user operable component, the user operable component being associated with a product or service on offer;
running a server process on server apparatus comprised in the transaction handling apparatus and storing purchase data comprising identification data identifying each of plural purchasers;
operating each of plural client processes in cooperation with the server process at a location remote from the server apparatus;
operating payment processing apparatus in dependence on operation of the client processes to receive payment in respect of each of the client processes and to convey the payments to the vendor, the payment received in respect of each client process being a part of the price of the product or service; and
storing product data relating to the product or service associated with the user operated component in dependence on operation by a user of the user operable component which is displayed on a client process by the vendor process, the stored product data being comprised in the purchase data.

Embodiments of the second aspect of the present invention may comprise one or more features of the first aspect of the present invention.

According to a third aspect of the present invention there is provided a computer program comprising program instructions for causing computer apparatus to perform the method according to the second aspect of the present invention. More specifically the computer program may be one of: embodied on a record medium; embodied in a read only memory; stored in a computer memory; and carried on an electrical carrier signal. Further embodiments of the third aspect of the present invention may comprise one or more features of the first aspect of the present invention.

According to a fourth aspect of the present invention there is provided a computer system comprising program instructions for causing computer apparatus to perform the method according to the second aspect of the present invention. More specifically the program instructions may be at least one of: embodied on a record medium; embodied in a read only memory; stored in a computer memory; and carried on an electrical carrier signal. Further embodiments of the fourth aspect of the present invention may comprise one or more features of the first aspect of the present invention.

The present inventors have appreciated the features of providing for change of the purchase data by users and the monitoring at the server of payments made by group members to be of wider applicability than hitherto described. According to a fifth aspect of the present invention there is therefore provided transaction handling apparatus which is operable to effect a transaction between a group of purchasers and a vendor, the transaction handling apparatus comprising:
server apparatus operable to run a server process and store purchase data comprising identification data identifying each of plural purchasers and price data corresponding to a price for a product or service offered by a vendor;
plural client processes each operable in cooperation with the server process at a location remote from the server apparatus, each client process being configured to provide for entry by a user of the client process of plural different commands which are operative to change the purchase data; and
payment processing apparatus operable in dependence on operation of the client processes to receive payment in respect of each of the client processes and to convey the payments to the vendor, the payment received in respect of each client process being a part of the price of the product or service.

As described above the configuration of each client process to provide for entry by a user of the client process of plural different commands which are operative to change the purchase data may provide for the like of a group leader to determine the nature of a group purchase and for group members to opt in or opt out of a group purchase and to record pertinent information such as passport details. The server apparatus may be further operable to record payments received in respect of the plural client processes. Operation of the server apparatus to record payments received in respect of the plural client processes may enable the like of the group leader to monitor which group members have paid. Further embodiments of the fifth aspect of the present invention may comprise one or more features of the first aspect of the present invention.

According to a sixth aspect of the present invention there is provided a method of effecting a transaction between a group of purchasers and a vendor by way of transaction handling apparatus, the method comprising:
running a server process on server apparatus comprised in the transaction handling apparatus and storing purchase data comprising identification data identifying each of plural purchasers and price data corresponding to a price for a product or service offered by a vendor;
operating each of plural client processes in cooperation with the server process at a location remote from the server apparatus, each client process being configured to provide for entry by a user of the client process of plural different commands which are operative to change the purchase data; and
operating payment processing apparatus in dependence on operation of the client processes to receive payment in respect of each of the client processes and to convey the payments to the vendor, the payment received in respect of each client process being a part of the price of the product or service.

Embodiments of the sixth aspect of the present invention may comprise one or more features of the first aspect of the present invention.

According to a seventh aspect of the present invention there is provided a computer program comprising program instructions for causing computer apparatus to perform the method according to the sixth aspect of the present invention. More specifically the computer program may be one of: embodied on a record medium; embodied in a read only memory; stored in a computer memory; and carried on an electrical carrier signal. Further embodiments of the seventh aspect of the present invention may comprise one or more features of the first aspect of the present invention.

According to an eighth aspect of the present invention there is provided a computer system comprising program instructions for causing computer apparatus to perform the method according to the sixth aspect of the present invention. More specifically the program instructions may be at least one of: embodied on a record medium; embodied in a read only memory; stored in a computer memory; and carried on an electrical carrier signal. Further embodiments of the eighth aspect of the present invention may comprise one or more features of the first aspect of the present invention.

According to a further aspect of the present invention there is provided transaction handling apparatus which is operable to effect a transaction between a group of purchasers and a vendor, the transaction handling apparatus comprising: server apparatus operable to run a server process; plural client processes each operable in cooperation with the server process at a location remote from the server apparatus; and payment processing apparatus operable in dependence on operation of the client processes to receive payment in respect of each of the client processes and to convey the payments to the vendor, the payment received in respect of each client process being a part of the price of the product or service. Embodiments of the further aspect of the present invention may comprise one or more features of any previous aspect of the present invention.

### Brief Description of Drawings

The present invention will now be described by way of example only with reference to the following drawings, of which:
Figure 1 is a block diagram representation of apparatus according to the present invention;
Figure 2A shows a first dialog box which is operable to provide access to a transaction handling account;
Figure 2B shows a second dialog box which is operable by a group leader to configure a group purchase;
Figure 2C shows a third dialog box which is operable by a person invited to join a group;
Figure 2D shows a fourth dialog box which is operable by a group member to make a payment towards a group purchase;
Figure 2E shows a fifth dialog box which is operable by a group member to obtain details relating to a completed group purchase; and
Figure 3 is a flow chart showing the steps involved in a method according to the present invention.

### Description of Embodiments

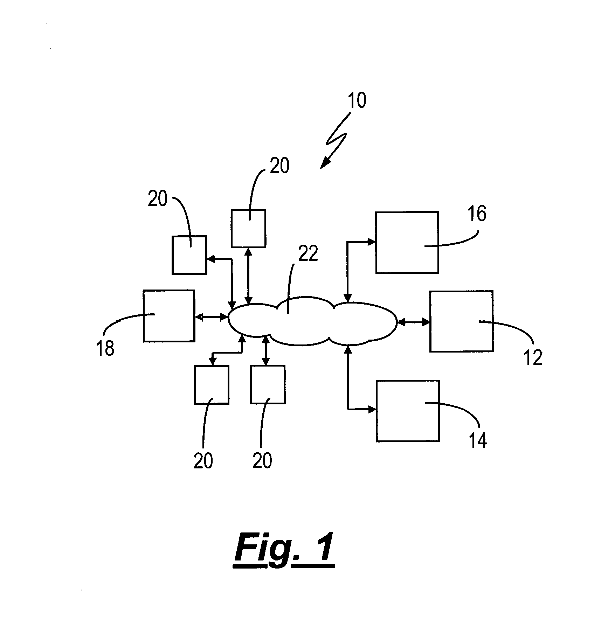

Transaction handling apparatus 10 according to the invention is shown in Figure 1. The transaction handling apparatus 10 comprises server apparatus 12, which is operative to run a server process, vendor apparatus 14, which is operative to run a vendor process, payment processing apparatus 16, main client process running apparatus 18 and several secondary client process running apparatus 20. Communication between and amongst these components is by way of the Internet 22. Each of the main and secondary client process running apparatus 18, 20 is constituted by a Personal Computer, such as a laptop, or a mobile computing device, such as a smartphone. The payment processing apparatus 16 is controlled and operated by a bank or a third party payment processor, such as PayPal, on a secure server. In one embodiment the vendor apparatus 14 is controlled and operated by a holiday package vendor on their server and the server apparatus 12 is controlled and operated by an intermediate organisation on their server. The intermediate organisation is authorised to act as an intermediary between purchasers and the vendor. In another embodiment the vendor and the intermediate organisation are the same such that the vendor apparatus 14 and the server apparatus 12 are controlled and operated by the same organisation. As will become apparent from the following description the main and secondary client process running apparatus 18, 20 are operated by persons invited to be involved in or actually involved in a group purchase.

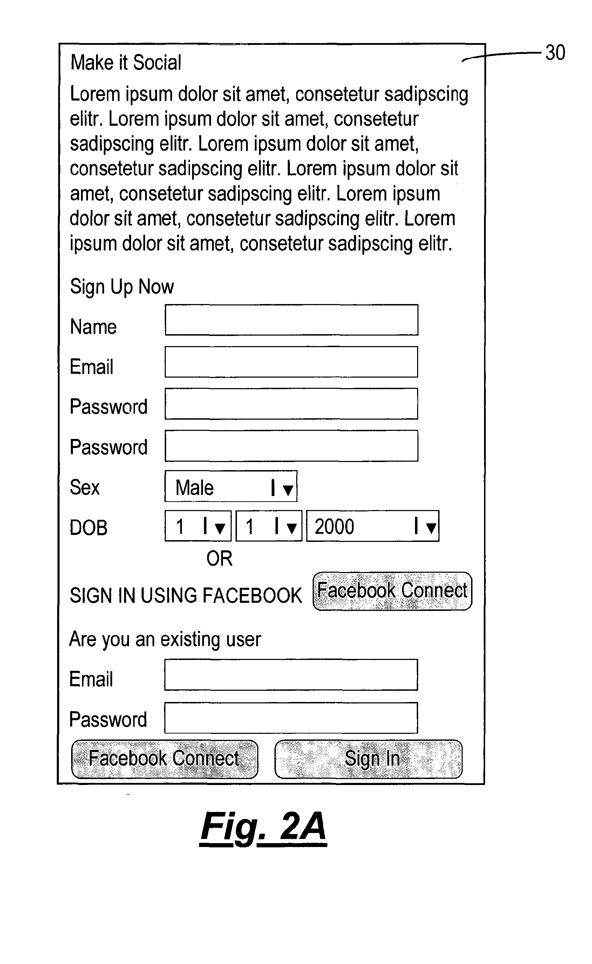

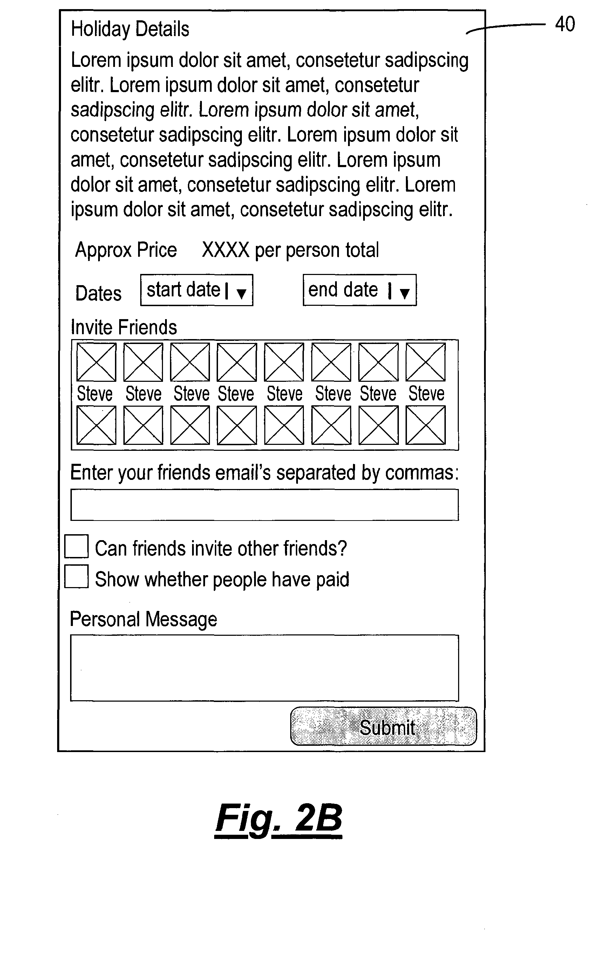

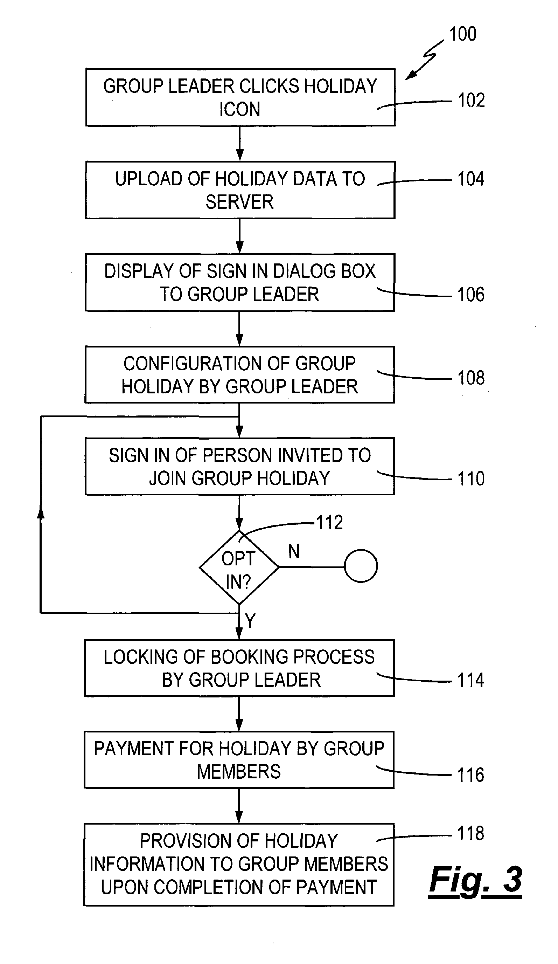

Use of apparatus according to the invention will now be described with reference to Figure 1, Figures 2A to 2E and Figure 3, which shows the steps involved in flow chart form 100. Persons who wish to use the group holiday management service provided by the intermediate organisation open individual accounts with the intermediate organisation. An individual account is opened by clicking on the intermediate organisation's icon on the vendor's website or by opening an account directly with the intermediate organisation. The intermediate organisation's icon is displayed on the vendor's website and its function is described further below. Irrespective of the means by which the account is being opened the dialog box 30 shown in Figure 2A is presented to the interested person as a web browser window on his PC or mobile device display screen which is superimposed on the web browser window displaying the vendor's website and such that the dialog box 30 is of smaller dimensions than the web browser window. The dialog boxes shown in Figures 2B to 2E are displayed in a similar fashion. The dialog box 30 contains spaces for entry of account set-up information, such as the user name, email address, password, sex and date of birth. Upon entry of the requested information an account is created which can be subsequently accessed upon entry in the dialog box 30 of appropriate sign in information, such as the user name and the password or the email address and the password. Alternatively the user creates an account by way of an existing social media application, such as Facebook, whereby the requisite registration information is copied from the social media application. The user registers by way of this alternative approach by clicking a dedicated box in the dialog box 30. A user also gains access to an already created account by way of an existing social media application which is operative upon the user clicking a further dedicated box provided in the dialog box 30 to gain access to the account and without the user having to enter his or her sign in information in the dialog box. A large number of users of the group holiday management service forms over time.

An on-line catalogue of package holidays is provided by the vendor process and is accessible by way of a web browser on a PC (which is represented in Figure 1 by the main client process running apparatus 18). A user browses the package holidays in the on-line catalogue and identifies a particular holiday package as being appropriate for a group holiday. An icon (which constitutes a user operable component) representing the intermediate organisation is displayed beside each package holiday in the on-line catalogue. The icon is embedded in the vendor's webpage and such that the webpage comprises a link to an external script file. Appropriate html code is of the form: <html>, ..., <script src = "URL for external script file"> </script>, </body>, </html>. The user clicks the icon beside his chosen holiday package 102. The URL, which is unique to the chosen holiday package, is conveyed to the server process which is operative to determine by way of a look up table whether or not the server stores the product data relating to the chosen package holiday. If not, the server process is operative to obtain the product data from a third party database, such as TourCMS, or from the vendor's own database. The product data and client process configuration data is then conveyed from the server to the client process. The configuration data determines the size, layout and design of a dialog box window, e.g. in the form of an i-frame, to be superimposed on the vendor's webpage. According to another approach where no product data is stored by the server or no product data is present in a third party or the vendor's database, clicking of the icon initiates a scraping process of known form and function to acquire the product data from the data in the vendor's webpage. Such a scraping process enables time varying information, such as prices, to be more readily reflected in the product data. The scraping process also enables information which has been selected by the user from the like of drop-down boxes to be scraped. According to this other approach, the server is operative to initiate scraping of the vendor's webpage for the product data, e.g. by way of grabbing of microdata from the webpage. Irrespective of the approach followed, the product data is stored in the server apparatus 12, 104. The product data comprises information identifying the chosen package holiday such as the departure airport, the destination, the hotel name, price and the like. Clicking of the icon also causes the server process to initiate a main client process which runs on the main client process running apparatus 18. The main client process is operative to display the sign-in dialog box 30, 106 shown in Figure 2A. The sign-in dialog box layout is determined by the configuration data provided by the server. When what is now the group leader signs in to his account the main client process is operative to display a second dialog box which is operable by the group leader to configure the group holiday 108. The second dialog box 40 is shown in Figure 2B. The main client process is operative in cooperation with the server process to display the product data to the group leader by way of the second dialog box 40. The group leader configures the server apparatus 12 stored purchase data, which comprises the product data, by specifying the holiday start and end dates by way of a drop down calendar accessible by clicking part of the second dialog box 40. The group leader also specifies by way of clickable boxes on the second dialog box 40 whether or not friends can also invite friends to join the group and whether or not group members will be shown whether or not other group members have paid. The group leader further specifies by way of a clickable box whether or not group members can vote on parts of a holiday package. The group leader then enters the email address of each person whom he wishes to invite to join the group along with a personal message and the main client process is operative to send an email containing a clickable link to each invited person.

Product data which is stored in the server apparatus 12 can be changed by the vendor. According to one approach the vendor apparatus 14 is granted limited administrator privileges such that the vendor may gain access to and change a part of the product data. The vendor may thereby change the stored product data such as in respect of the like of pricing, passport information or dates and times of a holiday. According to another approach a vendor communicates with at least one group member by way of a dialog box to thereby influence at least one group member whereupon the group member changes the stored product data as described elsewhere herein. The transaction handling apparatus is also configured to compare the stored product data with data held by a third party, such as TourCMS, on a periodic basis such as once a day and to update the stored product data in dependence on the comparison. The stored product data is updated thereby to take account of changes pertinent to the stored product data, such as changes in pricing.

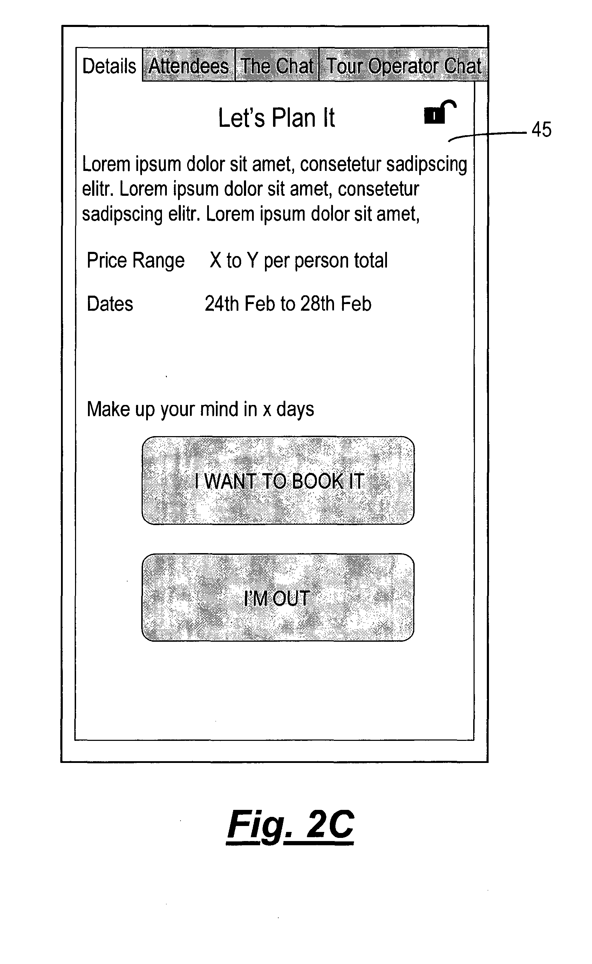

Upon receipt of an invitation from the group leader a potential group member clicks on the clickable link in the email whereupon the vendor's website is displayed to the potential group member on his PC or mobile device with a sign in dialog box 30 superimposed on the vendor's website. The potential group member then signs into his intermediate organisation account 110. A third dialog box is displayed to the potential group member by way of a secondary client process which runs on his PC or mobile computing device. The PC or mobile computing device constitutes secondary client process running apparatus 20. The third dialog box 45 is shown in Figure 2C. The third dialog box 45 displays the holiday information and the invited person's share of the total cost of the holiday. The potential group member has the choice of either clicking a first button on the third dialog box 45 to commit to joining the group booking or clicking a second button on the third dialog box 45 to opt out of the group holiday 112. Upon clicking the first button the secondary client process is operative to display a further dialog box (not shown) seeking confirmation that the potential group member wishes to proceed whilst warning the potential group member that if he confirms he is making a legally binding agreement with the vendor to pay a specified portion of the total cost of the holiday. If the group leader has chosen to be a group member a third dialog box 45 is displayed to him and the group leader interacts by way of the third dialog box 45 in the same fashion as each invited person. If the group leader has chosen to allow group voting the third dialog box 45 contains user clickable areas which provide for voting for and against holiday features, such as different holiday dates, different hotels or different activities. The group voting approach is a preliminary phase before commitment to a particular holiday package whereby a consensus can be reached in a group as to the exact form of the holiday.

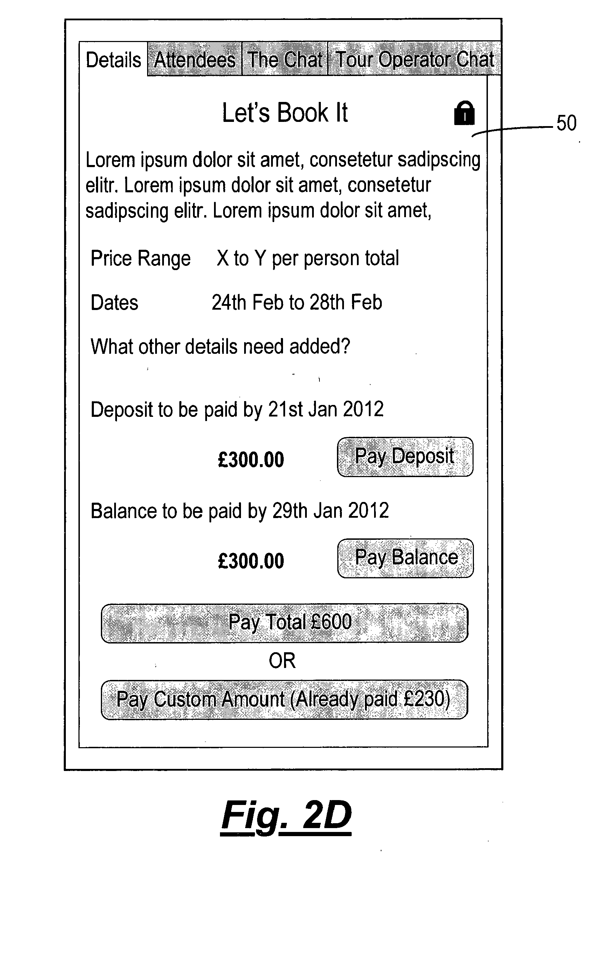

The server process is operative to store information identifying persons who have chosen to commit to the holiday. When sufficient persons have committed to the holiday, e.g. to cover the total cost, the group leader locks the booking process by way of a clickable button provided on a dialog box (not shown) which is displayed to him by way of his intermediate organisation account 114. When the booking process is locked each client process is operative to display a fourth dialog box which is operable by each group member to make payment towards the holiday 116. The fourth dialog box 50 is shown in Figure 2D. The fourth dialog box 50 contains four clickable buttons for payment of a deposit, payment of the balance, payment of the whole sum and payment of a custom amount. Deadlines for payment of the deposit and for payment of the balance are specified beside the appropriate button. Where the pay for other group member option is enabled, the group member can pay on behalf of another group member. The group member clicks the appropriate button whereupon the client process is operative to engage the services of a third party payment handling application, such as a bank e-commerce payment handling application or PayPal, to process the transfer of funds from the group member to the vendor. The server process is operative in cooperation with the client processes to record payments made by the group members. The group leader is able to monitor payments as they are made by the group members by way of inspection of his intermediate organisation account. If the group leader has chosen to make the payment status visible to group members each group member can inspect the payment status by way of his intermediate organisation account.

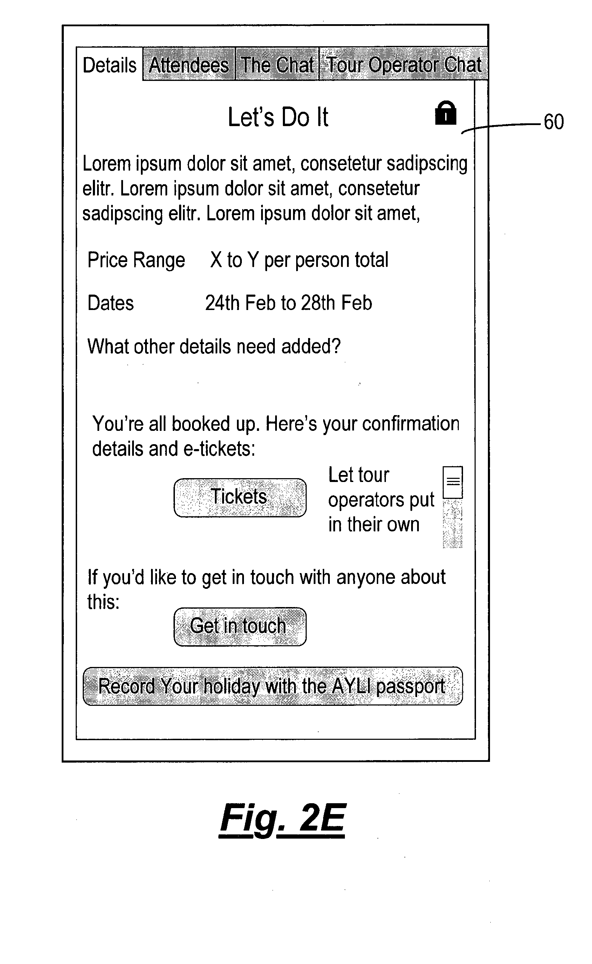

The server apparatus 12 is operative to compare the sum of the payments made with the cost of the holiday and thereupon determine when sufficient payment has been made. When such a determination is made the server process is operative in cooperation with the client processes to display a fifth dialog box to the group members. The fifth dialog box 60 is shown in Figure 2E and is operable by each group member to obtain details relating to the completed group purchase and to provide supplementary information 118. The fifth dialog box 60 is operable by way of clickable buttons to do the like of download e-tickets, enter required travel information, such as passport details, and get in touch with the other group members. Clicking the get in touch button opens a further, information dialog box (not shown) which is configured for the posting of text, graphics files, photographs and the like. Each client process also provides a support dialog box (not shown) which enables a group member to communicate with a representative of the intermediate organisation, the vendor or the payment processor to seek help or guidance. The group member's information dialog box and the support dialog box are overlaid with the presently operative main dialog box, e.g. the opt in or out dialog box or the payment dialog box, with a particular dialog box being selectable by the group member by way of a clickable tab provided in a window in which the dialog boxes are displayed.

When a holiday has been booked and paid for, the transaction handling apparatus invention is operative to provide for the inclusion of supplementary features, such as activities or day trips. The inclusion of such supplementary features is by way of a clickable icon in the vendor's website next to each supplementary feature as displayed by the vendor. Clicking of an icon for a supplementary feature causes the opening of a sign in dialog box 30 and the uploading of supplementary feature purchase data as described elsewhere herein. Group members then act in respect of the supplementary feature as regards the like of opting in or out, voting and payment as described elsewhere herein. The transaction handling apparatus is further operative to make recommendations to group members with regards to supplementary features. More specifically a data harvesting and interpretation process comprised in the transaction handling apparatus is operative to harvest stored data or data stored elsewhere by an associated third party social media application, such as Facebook. Then the data harvesting and interpretation process is operative to determine characteristic data for the group members, such as their age group, personal interests or past holidays or activities booked, on the basis of the harvested data and to select at least one feature for recommendation in dependence on the determined characteristic. For example if group members have in the past booked activities involving physical exertion the transaction handling apparatus is operative to recommend activities of a similar nature.

## Claims

1. Transaction handling apparatus which is operable to effect a transaction between a group of purchasers and a vendor, the transaction handling apparatus comprising:
vendor apparatus which is operable to run a vendor process, the vendor process being operative to display at least one user operable component, the user operable component being associated with a product or service on offer;
server apparatus operable to run a server process and store purchase data comprising identification data identifying each of plural purchasers;
plural client processes each operable in cooperation with the server process at a location remote from the server apparatus; and
payment processing apparatus operable in dependence on operation of the client processes to receive payment in respect of each of the client processes and to convey the payments to the vendor, the payment received in respect of each client process being a part of the price of the product or service,
the transaction handling apparatus being configured such that operation by a user of the user operable component displayed on a client process by the vendor process stores product data relating to the product or service associated with the user operated component, the stored product data being comprised in the purchase data.

2. Transaction handling apparatus according to claim 1 configured to initiate a main client process upon user selection of a product or service by operation of the user operable component associated with the product or service, the main client process being operative to display a client process dialog box.

3. Transaction handling apparatus according to claim 1 or 2 in which the server process is operative to store product data relating to the selected product or service in dependence on user operation of the user operable component.

4. Transaction handling apparatus according to claim 3 in which the server process stored product data is received from the vendor process.

5. Transaction handling apparatus according to claim 3 or 4 in which the server process stored product data is obtained from a third party.

6. Transaction handling apparatus according to any one of claims 3 to 5 in which the server process stored product data is obtained from vendor data associated with the selected product or service.

7. Transaction handling apparatus according to claim 6 in which the server process stored product data obtained from the vendor data by way of a web scraping process which is operative to acquire pertinent product data from the vendor data.

8. Transaction handling apparatus according to any one of the preceding claims in which the client process is operative in cooperation with the server process to display the product data to a user.

9. Transaction handling apparatus according to any one of the preceding claims in which the user operable component comprises a Universal Resource Locator (URL) which identifies the vendor web-address and the associated product or service.

10. Transaction handling apparatus according to claim 9 configured to send the URL to the server apparatus upon user operation of the operable component, the server apparatus being then operative to determine where product data is to be obtained.

11. Transaction handling apparatus according to any one of the preceding claims configured such that the plural client processes comprises a main client process and at least one secondary client process, the main client process being configured to provide for entry of a first plurality of commands which are operative to configure or change the purchase data and the at least one secondary client process being configured to provide for entry of a second plurality of commands which are operative to change the purchase data, the first and second plurality of commands being different to each other.

12. Transaction handling apparatus according to any one of the preceding claims configured such that the server apparatus comprises a web server, at least one client process is operative to provide a web browser and communication between server and client processes is by way of a computer network.

13. A method of effecting a transaction between a group of purchasers and a vendor by way of transaction handling apparatus, the method comprising:
running a vendor process on vendor apparatus, the vendor process being operative to display at least one user operable component, the user operable component being associated with a product or service on offer;
running a server process on server apparatus comprised in the transaction handling apparatus and storing purchase data comprising identification data identifying each of plural purchasers;
operating each of plural client processes in cooperation with the server process at a location remote from the server apparatus;
operating payment processing apparatus in dependence on operation of the client processes to receive payment in respect of each of the client processes and to convey the payments to the vendor, the payment received in respect of each client process being a part of the price of the product or service; and
storing product data relating to the product or service associated with the user operated component in dependence on operation by a user of the user operable component which is displayed on a client process by the vendor process, the stored product data being comprised in the purchase data.

14. A computer program comprising program instructions for causing computer apparatus to perform the method according to claim 13.

15. The computer program according to claim 14 in which the computer program is one of: embodied on a record medium; embodied in a read only memory; stored in a computer memory; and carried on an electrical carrier signal.
